(19) Europäisches Patentamt / European Patent Office / Office européen des brevets

(11) **EP 3 977 433 B1**

(12) **EUROPÄISCHE PATENTSCHRIFT**

(45) Veröffentlichungstag und Bekanntmachung des Hinweises auf die Patenterteilung:
**16.04.2025  Patentblatt 2025/16**

(21) Anmeldenummer: **20726014.2**

(22) Anmeldetag: **08.05.2020**

(51) Internationale Patentklassifikation (IPC):
**G08G 1/01** *(2006.01)*   **H04W 12/02** *(2009.01)*
**H04L 9/40** *(2022.01)*

(52) Gemeinsame Patentklassifikation (CPC):
**G08G 1/0112; G08G 1/0129; H04L 63/0421; H04W 12/02**

(86) Internationale Anmeldenummer:
**PCT/EP2020/062884**

(87) Internationale Veröffentlichungsnummer:
**WO 2020/239396 (03.12.2020 Gazette 2020/49)**

(54) **VERFAHREN ZUM BESTIMMEN EINER PARALLELFAHRWAHRSCHEINLICHKEIT VON KRAFTFAHRZEUGEN**

METHOD FOR DETERMINING A PARALLEL TRAVEL PROBABILITY OF MOTOR VEHICLES

PROCÉDÉ DE DÉTERMINATION D'UNE PROBABILITÉ DE DÉPLACEMENT PARALLÈLE DE VÉHICULES À MOTEUR

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **27.05.2019  DE 102019207693**

(43) Veröffentlichungstag der Anmeldung:
**06.04.2022  Patentblatt 2022/14**

(73) Patentinhaber: **Volkswagen Aktiengesellschaft
38440 Wolfsburg (DE)**

(72) Erfinder:
• **MAX, Stephan
 38518 Gifhorn (DE)**
• **NIESTROJ, Richard
 80802 München (DE)**
• **PROHM, Christopher
 80809 München (DE)**

(56) Entgegenhaltungen:
**EP-B1- 2 255 347      DE-C1- 19 606 258
US-A1- 2008 004 789**

**Beschreibung**

Die Erfindung betrifft ein Verfahren zum Bestimmen einer Parallelfahrwahrscheinlichkeit von Kraftfahrzeugen. Ferner betrifft die Erfindung eine Vorrichtung zur Datenverarbeitung, ein Computerprogramm und ein computerlesbares Speichermedium.

Moderne Kraftfahrzeuge ermöglichen ein Erfassen und Bereitstellen von Fahrdaten, welche beispielsweise an einen Server übermittelt und von diesem gesammelt und nutzbar gemacht werden können. Die Wahrung von Persönlichkeitsrechten bei der Fahrzeugführung ist im Hinblick auf Datenschutzbestimmungen hierbei von großer Bedeutung. Fahrdaten, die während des Fahrens eines Kraftfahrzeugs generiert werden, dürfen nicht ungefragt an externe Server oder andere Kraftfahrzeuge weitergeleitet werden. Um dennoch ein Erfassen und Weiterleiten an externe Dienste zu ermöglichen, werden die Fahrdaten anonymisiert. Hierbei wird das Kraftfahrzeug einer Anonymisierungsgruppe zugeordnet, in der beispielsweise im Hinblick auf einen Ort und/oder einen Zeitpunkt ähnliche Fahrdaten von Kraftfahrzeugen gesammelt werden. Auf Grundlage der Anonymisierungsgruppe werden die Fahrdaten anonymisiert, indem beispielsweise Zeit- und/oder Ortsangaben über die Anonymisierungsgruppe hinweg verrauscht werden.

Aus der DE 10 2015 226 650 A1 sind ein Verfahren und eine Vorrichtung zum anonymisierten Übermitteln eines ersten Werts zumindest eines Fahrparameters eines Fahrzeugs an eine externe Datenempfangseinheit bekannt. Bei dem Verfahren wird der erste Wert für den Fahrparameter des Fahrzeugs ermittelt. Es werden weitere Werte für den Fahrparameter, welche von weiteren Fahrzeugen an das Fahrzeug übermittelt werden, von dem Fahrzeug empfangen. Aus dem ersten Wert und den weiteren Werten wird ein zweiter Wert für den Fahrparameter so berechnet, dass der erste Wert von der externen Datenempfangseinheit nicht rekonstruierbar ist. Der zweite Wert wird an die externe Datenempfangseinheit übermittelt.

Ein Problem ist hierbei, dass eine derartige Vorgehensweise zwar für ein punktweises bzw. positionsweises Übermitteln von Fahrdaten möglich ist, beim Übermitteln von Fahrdaten zu vollständigen Strecken(abschnitten) ist dies jedoch nicht möglich, da bei einem vollständigen Streckenabschnitt nicht davon ausgegangen werden kann, dass sich im Umfeld eines betrachteten Kraftfahrzeugs befindende und potentiell in die gleiche Anonymisierungsgruppe fallende Kraftfahrzeuge alle die gleiche Strecke wie das betrachtete Kraftfahrzeugs fahren.

Aus der EP 2 255 347 A1 sind ein Verfahren und eine Vorrichtung zur Erlangung von Reisemusterinformationen bekannt. Hierbei werden Fahrzeuggeschwindigkeits-Identifikationsinformationen zum Identifizieren der Fahrzeuggeschwindigkeit eines Fahrzeugs auf einer Straße für mehrere Fahrzeuge erhalten. Basierend auf einer Verteilung der Fahrzeuggeschwindigkeits-Identifikationsinformationen werden die Fahrzeuggeschwindigkeits-Identifikationsinformationen in Gruppen klassifiziert, die Bewegungen des Fahrzeugs entsprechen. Basierend auf der Klassifizierung wird eine Auftrittswahrscheinlichkeit einer Bewegung des Fahrzeugs erhalten.

Der Erfindung liegt die Aufgabe zu Grunde, ein Verfahren zum Bestimmen einer Parallelfahrwahrscheinlichkeit von Kraftfahrzeugen zu schaffen.

Die Aufgabe wird erfindungsgemäß durch ein Verfahren mit den Merkmalen des Patentanspruchs 1, eine Vorrichtung mit den Merkmalen des Patentanspruchs 8, ein Computerprogramm mit den Merkmalen des Patentanspruchs 9 und ein computerlesbares Speichermedium mit den Merkmalen des Patentanspruchs 10 gelöst. Vorteilhafte Ausgestaltungen der Erfindung ergeben sich aus den Unteransprüchen.

Insbesondere wird ein Verfahren zum Bestimmen einer Parallelfahrwahrscheinlichkeit von Kraftfahrzeugen zur Verfügung gestellt, wobei ein für eine Strecke bereitgestelltes Geschwindigkeitsprofil eines Kraftfahrzeugs zumindest abschnittsweise ausgewertet wird, wobei zum Auswerten auf Grundlage des Geschwindigkeitsprofils eine Zuordnung zu mindestens einer auf der Strecke vorhandenen Straßenklasse erfolgt, und wobei auf Grundlage der mindestens einen zugeordneten Straßenklasse ein Wahrscheinlichkeitswert berechnet und bereitgestellt wird.

Ferner wird insbesondere eine Vorrichtung zur Datenverarbeitung geschaffen, umfassend Mittel zur Ausführung der Verfahrensschritte des erfindungsgemäßen Verfahrens.

Weiter wird insbesondere ein Computerprogramm geschaffen, umfassend Befehle, die bei der Ausführung des Computerprogramms durch einen Computer diesen veranlassen, die Verfahrensschritte des erfindungsgemäßen Verfahrens auszuführen.

Zudem wird insbesondere ein computerlesbares Speichermedium geschaffen, umfassend Befehle, die bei der Ausführung durch einen Computer diesen veranlassen, die Verfahrensschritte des erfindungsgemäßen Verfahrens auszuführen.

Das Verfahren ermöglicht es, für ein betrachtetes Kraftfahrzeug, das auf einer Strecke fährt, einen Wahrscheinlichkeitswert für eine Parallelfahrwahrscheinlichkeit von anderen Kraftfahrzeugen zu bestimmen, insbesondere zu schätzen. Eine Parallelfahrwahrscheinlichkeit bezeichnet hierbei die Wahrscheinlichkeit, dass ein anderes sich im Umfeld befindendes und potentiell in dieselbe Anonymisierungsgruppe fallendes Kraftfahrzeug tatsächlich die gleiche Strecke wie das betrachtete Kraftfahrzeug, das heißt parallel zu dem betrachteten Kraftfahrzeug, fährt. Auf Grundlage erhaltener, insbesondere erfasster Fahrdaten, wird ein Geschwindigkeitsprofil des betrachteten Kraftfahrzeugs erstellt. Die Fahrdaten umfassen beispielsweise erfasste Messwerte und Zustandsdaten des Kraftfahrzeugs und eines Umfelds des Kraftfahrzeugs, welche mit zugehörigen Zeitstempeln und Positionsdaten verknüpft sind. Das Geschwindigkeitsprofil des Kraftfahrzeugs wird beispielsweise auf Grundlage von erfassten Geschwindigkeitsmesswerten erstellt. Anschließend wird das Geschwindigkeitsprofil zumindest abschnittsweise ausgewertet. Hierbei ist insbesondere vorgesehen, dass Geschwindigkeiten nach Klassen oder Bereichen zusammengefasst werden. Den Klassen oder Bereichen ist bzw. wird jeweils eine Straßenklasse zugeordnet. Je nach vorliegender Geschwindigkeit bzw. vorliegender Geschwindigkeitsklasse oder -bereich des Streckenabschnitts wird diesem Streckenabschnitt eine zugehörige Straßenklasse zugeordnet. Auf Grundlage der jeweils zugeordneten Straßenklasse wird anschließend ein Wahrscheinlichkeitswert für die Parallelfahrwahrscheinlichkeit berechnet und bereitgestellt. Im einfachsten Fall können die Straßenklassen mit entsprechenden Wahrscheinlichkeitswerten für eine Parallelfahrt von anderen Kraftfahrzeugen verknüpft sein.

Die Straßenklassen können insbesondere die folgenden Geschwindigkeitszuordnungen aufweisen:

- Geschwindigkeit >110 km/h: Autobahn
- Geschwindigkeit 80 bis 110 km/h: Landstraße
- Geschwindigkeit 40 bis 70 km/h: Stadt
- Geschwindigkeit <40 km/h: Wohngebiet

Der Vorteil des Verfahrens ist, dass eine Parallelfahrwahrscheinlichkeit auf Grundlage einer ohnehin bereits verfügbaren Messgröße, nämlich der Geschwindigkeit, geschätzt werden kann. Hierdurch kann das Verfahren auf einfache Weise ohne großen Mehraufwand umgesetzt werden.

Auf Grundlage der bestimmten Parallelfahrwahrscheinlichkeit kann anschließend eine Gruppengröße einer beim Anonymisieren verwendeten Anonymisierungsgruppe angepasst werden. Ist beispielsweise gefordert, dass eine Anonymisierungsgruppe für ähnliche Fahrdaten (z.B. hinsichtlich Zeit und/oder Ort) mindestens 5 Kraftfahrzeuge umfassen muss, um eine ausreichende Verschleierung der Fahrdaten sicherzustellen, und wurde mittels des erfindungsgemäßen Verfahrens für die Parallelfahrwahrscheinlichkeit eines Kraftfahrzeugs ein Wahrscheinlichkeitswert von 0,2 bestimmt (d.h. jedes fünfte Kraftfahrzeug fährt eine parallele Strecke), so muss die Gruppengröße auf 25 Kraftfahrzeuge im Umfeld des betrachteten Kraftfahrzeugs vergrößert werden, um eine ausreichende Verschleierung sicherzustellen. Die Fahrdaten des Kraftfahrzeugs werden dann auf Grundlage von Fahrdaten von insgesamt 25 Kraftfahrzeugen verschleiert, beispielsweise indem mit den Fahrdaten korrespondierende Zeitstempel gemeinsam um einen zufällig aus einer statistischen Verteilung von Zeitstempeln der 25 Kraftfahrzeuge gewählten Wert verschoben ("verrauscht") werden. Sind die Zeitstempel der 25 Kraftfahrzeuge beispielsweise um einen Mittelwert herum über einen Zeitraum von 600 Sekunden gleichverteilt, so werden die Zeitstempel der Fahrdaten des betrachteten Kraftfahrzeugs um einen zufällig aus dieser gleichverteilten Menge gezogenen Wert verschoben. Eine ausreichende Verschleierung der konkreten Fahrdaten des betrachteten Kraftfahrzeuge innerhalb der Anonymisierungsgruppe ist dann sichergestellt.

Das Verfahren wird als computerimplementierte Erfindung ausgeführt.

Insbesondere wird das Verfahren mittels einer Recheneinrichtung, die auf einen Speicher zugreifen kann, ausgeführt. Die Recheneinrichtung kann als eine Kombination von Hardware und Software ausgebildet sein, beispielsweise als Programmcode, der auf einem Mikrocontroller oder Mikroprozessor ausgeführt wird.

Das Verfahren kann sowohl in einem Kraftfahrzeug als auch auf einem Server ausgeführt werden. Insbesondere können Kraftfahrzeuge jeweilige Fahrdaten an den Server übermitteln.

Das Verfahren kann beispielsweise auf Grundlage des in DE 10 2015 226 650 A1 beschriebenen Verfahrens ausgeführt werden.

In einer Ausführungsform ist vorgesehen, dass auf Grundlage der mindestens einen zugeordneten Straßenklasse zusätzlich jeweils ein Abstand zwischen Abzweigen zugeordnet wird, wobei das Berechnen des Wahrscheinlichkeitswerts unter Berücksichtigung der jeweils zugeordneten Abstände erfolgt. Ein Abzweig bezeichnet hierbei eine Abfahrt von einem Streckenabschnitt, beispielsweise eine Autobahnausfahrt oder eine Kreuzung, an der ein Kraftfahrzeug in eine andere Straße abbiegen kann.

In einer weiterbildenden Ausführungsform ist vorgesehen, dass der Abstand zwischen den Abzweigen auf Grundlage einer bereitgestellten Straßenkarte bestimmt wird. Hierbei kann vorgesehen sein, dass für einzelne Straßenklassen mehrere Abstände über Bereiche in der Karte gemittelt werden.

In einer Ausführungsform ist vorgesehen, dass auf Grundlage der mindestens einen zugeordneten Straßenklasse zusätzlich jeweils eine Abzweignutzungswahrscheinlichkeit zugeordnet wird, wobei das Berechnen des Wahrscheinlichkeitswertes unter Berücksichtigung der zugeordneten Abzweignutzungswahrscheinlichkeit(en) erfolgt. Hierdurch kann direkt berücksichtigt werden, wie groß die Wahrscheinlichkeit ist, dass aktuell sich auf dem gleichen Streckenabschnitt wie das betrachtete Kraftfahrzeug befindende andere Kraftfahrzeuge diesen Streckenabschnitt am nächsten Abzweig verlassen.

In einer weiterbildenden Ausführungsform ist vorgesehen, dass von Kraftfahrzeugen erfasste Fahrdaten im Hinblick auf eine Abzweignutzung ausgewertet werden, wobei die Abzweignutzungswahrscheinlichkeit(en) auf Grundlage eines Auswerteergebnisses festgelegt oder korrigiert werden. Hierdurch kann überprüft werden, ob die verwendeten Abzweignutzungswahrscheinlichkeiten dem realen Verhalten der anderen Kraftfahrzeuge entsprechen. Insbesondere werden hierzu Fahrdaten der anderen Kraftfahrzeuge zumindest in gemittelter bzw. anonymisierter Form analysiert. Beim Auswerten der Fahrdaten können zum Feststellen einer Abzweignutzung beispielsweise die folgenden Kriterien berücksichtigt werden: eine Betätigung eines Blinkers, Geschwindigkeitsprofile (z.B. eine Geschwindigkeitsreduzierung vor einem Abzweig), Lenkprofile, Querbewegungen etc. Insbesondere können die Kriterien auch in einer Gesamtschau bzw. in Kombination ausgewertet werden. So kann beispielsweise von einer Abzweignutzung ausgegangen werden, wenn ein Blinker betätigt wird, eine starke Lenkbewegung vorliegt und gleichzeitig eine starke Geschwindigkeitsreduktion erfolgt. Beim Auswerten dieser Kriterien kommen insbesondere auch statistische Auswerteverfahren zum Einsatz, um eine Abzweignutzungswahrscheinlichkeit für eine Straßenklasse bzw. einen Streckenabschnitt zu schätzen. Beim Auswerten können ferner auch Verfahren des Maschinenlernens zum Einsatz kommen, beispielsweise Neuronale Netze, die auf Grundlage von in erfassten Fahrdaten beobachtbaren Kriterien eine Abzweignutzung bzw. Abzweignutzungswahrscheinlichkeit schätzen.

In einer weiteren Ausführungsform ist vorgesehen, dass das Zuordnen der mindestens einen Straßenklasse, des Abstands und/oder der Abzweignutzungswahrscheinlichkeit unter Berücksichtigung einer örtlichen und/oder zeitlichen Abhängigkeit erfolgt. Insbesondere können in Abhängigkeit eines Ortes, einer Region und/oder eine Landes unterschiedliche Werte verwendet werden. Alternativ können verwendete Werte in Abhängigkeit von lokalen, regionalen und/oder nationalen Korrekturfaktoren angepasst werden. Hierdurch können örtliche Unterschiede in Bezug auf Geschwindigkeiten auf bestimmten Straßenklasse, Abständen von Abzweigen und/oder Abzweignutzungswahrscheinlichkeiten beim Bestimmen der Parallelfahrwahrscheinlichkeit berücksichtigt werden. So ist eine Geschwindigkeit auf einer Landstraße in einer Bergregion üblicherweise eine andere als auf einer Landstraße im Flachland. Ein Abstand zwischen Abzweigen kann beispielsweise mit einer Besiedelungsdichte variieren. Eine zeitliche Abhängigkeit kann insbesondere durch Berücksichtigung von Tageszeiten (morgendlicher Berufsverkehr, mittags, abendlicher Berufsverkehr), Wochentagen (z.B. Wochentag oder Wochenende) und/oder Jahreszeiten (Winter gegenüber Sommer etc.) berücksichtigt werden.

In einer Ausführungsform ist vorgesehen, dass der Abstand zwischen Abzweigen um einen Sicherheitsabstand verringert wird und/oder dass die Abzweignutzungswahrscheinlichkeit um einen Sicherheitswert erhöht wird. Hierdurch kann das Bestimmen der Parallelfahrwahrscheinlichkeit auf konservative Weise, das heißt mit Berücksichtigung einer Sicherheitsmarge, bestimmt werden. Anders ausgedrückt wird die Parallelfahrwahrscheinlichkeit anschließend unterschätzt, sodass eine ausreichende Verschleierung der Fahrdaten bei einem nachfolgenden Festlegen einer Größe einer Anonymisierungsgruppe unter Berücksichtigung der Parallelfahrwahrscheinlichkeit in jedem Fall sichergestellt ist.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Ausführen des Verfahrens;

Fig. 2    ein schematisches Ablaufdiagramm einer Ausführungsform des Verfahrens zum Bestimmen einer Parallelfahrwahrscheinlichkeit von Kraftfahrzeugen.

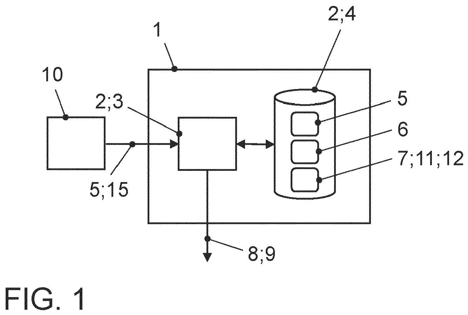

In Fig. 1 ist eine schematische Darstellung einer Vorrichtung 1 zum Ausführen des Verfahrens gezeigt. Die Vorrichtung 1 umfasst Mittel 2 zum Ausführen des Verfahrens. Die Mittel 2 umfassen eine Recheneinrichtung 3 und einen Speicher 4. Zum Durchführen der Verfahrensschritte kann die Recheneinrichtung 3 auf den Speicher 4 zugreifen und in diesem Rechenoperationen durchführen.

In dem Speicher 4 sind Fahrdaten 5 für eine Strecke bzw. einen Streckenabschnitt eines Kraftfahrzeugs hinterlegt, welche eine Sensorik 10 des Kraftfahrzeugs, beispielswiese über eine geeignete Schnittstelle, der Vorrichtung 1 bereitgestellt hat. Eine Strecke bzw. ein Streckenabschnitt umfasst hierbei beispielsweise die vergangenen 10 Minuten. Die Recheneinrichtung 2 extrahiert aus den Fahrdaten 5 ein Geschwindigkeitsprofil 6 auf der Strecke bzw. dem Streckenabschnitt. Auf Grundlage des extrahierten Geschwindigkeitsprofils 6 ordnet die Recheneinrichtung 2 auf der Strecke vorhandenen Streckenabschnitten jeweils eine Straßenklasse 7 zu.

Die Zuordnung zu den Straßenklassen 7 ist hierbei beispielsweise die folgende:

- Geschwindigkeit >110 km/h: Autobahn
- Geschwindigkeit 80 bis 110 km/h: Landstraße
- Geschwindigkeit 40 bis 70 km/h: Stadt
- Geschwindigkeit <40 km/h: Wohngebiet

Beispielhaft umfasst die Strecke nacheinander drei Abschnitte mit den folgenden Straßenklassen 7: Autobahn, Landstraße und Stadt.

Auf Grundlage der zugeordneten Straßenklassen 7 berechnet die Recheneinrichtung 3 einen Wahrscheinlichkeitswert 8 und stellt diesen anschließend bereit, insbesondere indem dieser als Wahrscheinlichkeitswertsignal 9, beispielsweise als digitales Datenpaket, ausgegeben wird. Hierzu werden in einem ersten Schritt Einzelwahrscheinlichkeitswerte für jeden der Streckenabschnitte berechnet. Anschließend wird ein Gesamtergebnis berechnet und als Wahrscheinlichkeitswert 8 bereitgestellt. Sind die Einzelwahrscheinlichkeitswerte einer Parallelfahrt für die oben beispielhaft genannten Streckenabschnitte beispielsweise 0,8; 0,7 und 0,6, so ergibt sich das Gesamtergebnis für eine Parallelfahrt auf der gesamten betrachteten Strecke zu

$$0,8 * 0,7 * 0,6 = 0,336.$$

Zum Ableiten der Einzelwahrscheinlichkeitswerte einer Parallelfahrt auf den beispielhaft genannten Streckenabschnitten kann insbesondere vorgesehen sein, dass Abstände 11 zwischen Abzweigen von dem Streckenabschnitt und Abzweignutzungswahrscheinlichkeiten 12 berücksichtigt werden. Hierbei werden insbesondere Erfahrungs- oder Schätzwerte verwendet. Die Abstände 11 und Abzweignutzungswahrscheinlichkeiten 12 sind ebenfalls in dem Speicher 4 hinterlegt, wobei diese jeweils mit den Straßenklassen 7 verknüpft sind.

In einem einfachen Beispiel sollen zur Erläuterung die folgenden Werte verwendet werden:

| Geschwindigkeit | >110 km/h | 80 bis 110 km/h | 40 bis 70 km/h | <40 km/h |
|---|---|---|---|---|
| Straßenklasse | Autobahn | Landstraße | Stadt | Wohngebiet |
| Abstand zwischen Abzweigen | >10 km | 5 km | 1 km | 500 m |
| Abzweignutzungswahrscheinlichkeit | 0,1 | 0,2 | 0,3 | 0,5 |

Es kann vorgesehen sein, dass der Abstand 11 zwischen den Abzweigen auf Grundlage einer bereitgestellten Straßenkarte bestimmt wird.

Sind beispielsweise zehn Kraftfahrzeuge auf einem Streckenabschnitt unterwegs, der der Straßenklasse "Autobahn" zugeordnet ist, so hat gemäß den Werten der Tabelle nach 10 km ein Kraftfahrzeug den Streckenabschnitt über einen Abzweig verlassen. Es verbleiben daher im Schnitt noch neun Kraftfahrzeuge, die die gleiche Strecke wie ein betrachtetes Kraftfahrzeug fahren. In einem Wohngebiet verbleiben von zehn Kraftfahrzeugen nach 500 m hingegen nur noch die Hälfte, da jedes zweite Kraftfahrzeug im Schnitt nach 500 m einen Abzweig genommen hat.

Im oben genannten Beispiel der drei Streckenabschnitte Autobahn, Landstraße und Stadt seien zur Verdeutlichung die Längen der Streckenabschnitte beispielhaft die folgenden: 20 km auf der Autobahn, 10 km auf der Landstraße und 1 km im Wohngebiet. Auf Grundlage der Daten in der Tabelle ergibt sich dann die folgende Parallelfahrwahrscheinlichkeit anderer Kraftfahrzeuge auf der gesamten Strecke (= 2*10 km Autobahn + 2*5 km Landstraße + 2*500 m Wohngebiet):

$$\text{Wahrscheinlichkeitswert} = 0,9*0,9*0,8*0,8*0,5*0,5 = 0,1296$$

Das bedeutet, dass im Beispiel geschätzt nur jedes achte Kraftfahrzeug eine Strecke parallel zu dem Kraftfahrzeug fährt. Eine vorgegebene Anzahl von Kraftfahrzeugen in einer Anonymisierungsgruppe müsste also um den Faktor 8 vergrößert werden, um eine ausreichende Verschleierung der Fahrdaten des betrachteten Kraftfahrzeugs über die gesamte Strecke sicherzustellen.

Es kann vorgesehen sein, dass von Kraftfahrzeugen erfasste Fahrdaten 5 im Hinblick auf eine Abzweignutzung ausgewertet werden, wobei die Abzweignutzungswahrscheinlichkeit(en) 12 auf Grundlage eines Auswerteergebnisses festgelegt oder korrigiert werden. Hierzu werden der Recheneinrichtung 3 zusätzlich auch weitere Fahrdaten 15 anderer Kraftfahrzeuge zugeführt. Die Recheneinrichtung 3 überprüft dann, ob die Abzweignutzungswahrscheinlichkeit(en) 12 mit den vorhandenen Werten übereinstimmt und korrigiert diese, falls eine Abweichung vorliegt.

Es kann ferner vorgesehen sein, dass das Zuordnen der mindestens einen Straßenklasse 7, des Abstands 11 und/oder der Abzweignutzungswahrscheinlichkeit 12 unter Berücksichtigung einer örtlichen und/oder zeitlichen Abhängigkeit erfolgt. Hierzu wird die oben angegebene Tabelle beispielsweise erweitert, um lokale, regionale und/oder nationale Unterschiede sowie zeitliche Abhängigkeiten (Abhängigkeiten von einer Tageszeit, einem Wochentag und/oder einer Jahreszeit usw.) zu berücksichtigen.

Es kann vorgesehen sein, dass die Recheneinrichtung 2 den Abstand 11 zwischen Abzweigen um einen Sicherheitsabstand verringert und/oder die Abzweignutzungswahrscheinlichkeit 12 um einen Sicherheitswert erhöht, um eine konservative Schätzung des Wahrscheinlichkeitswertes 8 für die Parallelfahrwahrscheinlichkeit bereitzustellen.

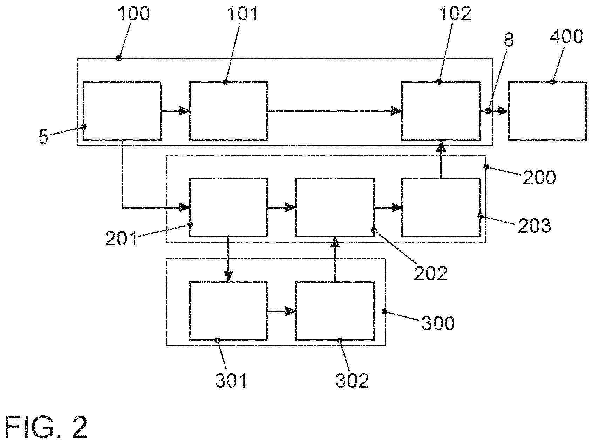

In Fig. 2 ist ein schematisches Ablaufdiagramm einer Ausführungsform des Verfahrens zum Bestimmen einer Parallelfahrwahrscheinlichkeit von Kraftfahrzeugen gezeigt. Ausgangspunkt des Verfahrens bilden von Kraftfahrzeugen bereitgestellte Fahrdaten 5. Die Fahrdaten 5 werden in einem Verfahrensabschnitt 100 in einem Verfahrensschritt 101 analysiert, wobei ein Geschwindigkeitsprofil eines betrachteten Kraftfahrzeugs extrahiert wird. Auf Grundlage des Geschwindigkeitsprofils erfolgt in einem Verfahrensschritt 102 eine Zuordnung zu mindestens einer auf der Strecke vorhandenen Straßenklasse. Ferner wird in diesem Verfahrensschritt 102 auf Grundlage der mindestens einen zugeordneten Straßenklasse ein Wahrscheinlichkeitswert 8 für die Parallelfahrtwahrscheinlichkeit berechnet und bereitgestellt. Dies erfolgt unter Berücksichtigung von Abständen zwischen Abzweigen auf Streckenabschnitten und zugehörigen Abzweignutzungswahrscheinlichkeiten.

Parallel hierzu wird im Rahmen eines Verfahrensabschnitts 200 in einem Verfahrensschritt 201 eine örtliche und/oder zeitliche Zuordnung der Fahrdaten ermittelt. Die Fahrdaten 5 werden hierzu in Bezug auf zugehörige Positionen und Zeitpunkte bzw. Zeiträume ausgewertet und beispielsweise örtlichen Bereichen einer Straßenkarte und/oder Zeiträumen zugeordnet.

In einem Verfahrensschritt 202 werden auf Grundlage der Positionen und Zeitpunkte bzw. Zeiträume der Fahrdaten 5 örtliche und zeitliche Einflussfaktoren identifiziert. Dies erfolgt insbesondere durch Berücksichtigung und Auswerten bzw. Vergleichen mit vorhandenen Kartendaten und/oder historische Fahrdaten.

In einem Verfahrensschritt 203 wird ausgehend hiervon auf statistischer Basis ein Parametersatz erzeugt, über den Werte, beispielsweise für die Abzweignutzungswahrscheinlichkeiten, abgeleitet und bereitstellt werden können. Dieser Parametersatz (bzw. die zugehörigen Werte) wird beim Ermitteln des Wahrscheinlichkeitswertes für die Parallelfahrwahrscheinlichkeit in Verfahrensschritt 102 berücksichtigt.

In einem Verfahrensabschnitt 300 wird parallel zu dem Verfahrensabschnitt 200 in einem Verfahrensschritt 301 auf Grundlage der in Verfahrensschritt 201 vorgenommenen örtlichen und zeitlichen Zuordnungen der Fahrdaten 5 ein Vergleich mit weiteren Fahrdaten anderer Kraftfahrzeuge durchgeführt. In den weiteren Fahrdaten der anderen Kraftfahrzeuge werden insbesondere eine reale Abzweignutzung auf Streckenabschnitten ermittelt und ausgewertet, sodass eine Abzweignutzungswahrscheinlichkeit berechnet werden kann. Diese berechnete Abzweignutzungswahrscheinlichkeit wird anschließend in einem Verfahrensschritt 302 zum Ableiten eines Korrekturwertes für die in Verfahrensschritt 202 identifizierten Einflussfaktoren verwendet. Einfach ausgedrückt wird eine einer Straßenklasse zugeordnete Abzweignutzungswahrscheinlichkeit um einen Korrekturwert korrigiert, um ein örtlich und zeitlich real vorliegendes Abbiegeverhalten zu berücksichtigen.

Der unter Berücksichtigung der örtlichen und zeitlichen Einflussfaktoren und des real beobachteten Abbiegeverhaltens in Verfahrensschritt 102 bestimmte Wahrscheinlichkeitswert 8 für die Parallelfahrwahrscheinlichkeit wird ausgegeben, beispielsweise als digitales Datenpaket und kann anschließend in einem Verfahrensschritt 400 zum Korrigieren einer Gruppengröße einer Anonymisierungsgruppe verwendet werden.

Das Verfahren hat den Vorteil, dass ein Wahrscheinlichkeitswert für eine Parallelfahrwahrscheinlichkeit auf einfachem Wege und ohne großen Mehraufwand bereitgestellt werden kann, mit dem eine Gruppengröße einer Anonymisierungsgruppe auf Grundlage einer gefahrenen Strecke korrigiert werden kann.

**Bezugszeichenliste**

| 1 | Vorrichtung |
|---|---|
| 2 | Mittel |
| 3 | Recheneinrichtung |
| 4 | Speicher |
| 5 | Fahrdaten |
| 6 | Geschwindigkeitsprofil |
| 7 | Straßenklasse |
| 8 | Wahrscheinlichkeitswert |
| 9 | Wahrscheinlichkeitswertsignal |
| 10 | Sensorik |
| 11 | Abstand |
| 12 | Abzweignutzungswahrscheinlichkeit |
| 15 | weitere Fahrdaten |
| 100 | Verfahrensabschnitt |
| 101-102 | Verfahrensschritte |
| 200 | Verfahrensabschnitt |
| 201-203 | Verfahrensschritte |
| 300 | Verfahrensabschnitt |
| 301-302 | Verfahrensschritte |

**Patentansprüche**

1. Computerimplementiertes Verfahren zum Bestimmen einer Parallelfahrwahrscheinlichkeit von Kraftfahrzeugen, wobei

   die Parallelfahrwahrscheinlichkeit die Wahrscheinlichkeit bezeichnet, dass ein anderes sich im Umfeld befindendes Kraftfahrzeug eine gleiche Strecke wie ein betrachtetes Kraftfahrzeug fährt, wobei ein für die Strecke bereitgestelltes Geschwindigkeitsprofil (6) des betrachteten Kraftfahrzeugs zumindest abschnittsweise ausgewertet wird, wobei zum Auswerten auf Grundlage des Geschwindigkeitsprofils (6) eine Zuordnung zu mindestens einer auf der Strecke vorhandenen Straßenklasse (7) erfolgt, und wobei auf Grundlage der mindestens einen zugeordneten Straßenklasse (7) ein Wahrscheinlichkeitswert (8) für eine Parallelfahrwahrscheinlichkeit berechnet und bereitgestellt wird.

2. Verfahren nach Anspruch 1, **dadurch gekennzeichnet, dass** auf Grundlage der mindestens einen zugeordneten Straßenklasse (7) zusätzlich jeweils ein Abstand (11) zwischen Abzweigen zugeordnet wird, wobei das Berechnen des Wahrscheinlichkeitswerts (8) unter Berücksichtigung der jeweils zugeordneten Abstände (11) erfolgt.

3. Verfahren nach Anspruch 2, **dadurch gekennzeichnet, dass** der Abstand (11) zwischen den Abzweigen auf Grundlage einer bereitgestellten Straßenkarte bestimmt wird.

4. Verfahren nach Anspruch 2 oder 3, **dadurch gekennzeichnet, dass** auf Grundlage der mindestens einen zugeordneten Straßenklasse (7) zusätzlich jeweils eine Abzweignutzungswahrscheinlichkeit (12) zugeordnet wird, wobei das Berechnen des Wahrscheinlichkeitswertes (8) unter Berücksichtigung der zugeordneten Abzweignutzungswahrscheinlichkeit(en) (12) erfolgt.

5. Verfahren nach Anspruch 4, **dadurch gekennzeichnet, dass** von Kraftfahrzeugen erfasste Fahrdaten (5,15) im Hinblick auf eine Abzweignutzung ausgewertet werden, wobei die Abzweignutzungswahrscheinlichkeit(en) (12) auf Grundlage eines Auswerteergebnisses festgelegt oder korrigiert werden.

6. Verfahren nach einem der vorangegangenen Ansprüche, **dadurch gekennzeichnet, dass** das Zuordnen der mindestens einen Straßenklasse (7), des Abstands (11) und/oder der Abzweignutzungswahrscheinlichkeit (12) unter Berücksichtigung einer örtlichen und/oder zeitlichen Abhängigkeit erfolgt.

7. Verfahren nach einem der Ansprüche 2 bis 6, **dadurch gekennzeichnet, dass** der Abstand (11) zwischen Abzweigen um einen Sicherheitsabstand verringert wird und/oder dass die Abzweignutzungswahrscheinlichkeit (12) um einen Sicherheitswert erhöht wird.

8. Vorrichtung (1) zur Datenverarbeitung, umfassend Mittel (2), die zur Ausführung der Verfahrensschritte des Verfahrens nach einem beliebigen der Ansprüche 1 bis 7 eingerichtet sind.

9. Computerprogramm, umfassend Befehle, die bei der Ausführung des Computerprogramms durch einen Computer diesen veranlassen, die Verfahrensschritte des Verfahrens nach einem beliebigen der Ansprüche 1 bis 7 auszuführen.

10. Computerlesbares Speichermedium, umfassend Befehle, die bei der Ausführung durch einen Computer diesen veranlassen, die Verfahrensschritte des Verfahrens nach einem beliebigen der Ansprüche 1 bis 7 auszuführen.

**Claims**

1. Computer-implemented method for determining a parallel travel probability of motor vehicles, wherein

   the parallel travel probability denotes the probability that another motor vehicle in the vicinity is traveling along the same route as an observed motor vehicle, wherein a speed profile (6) of the observed motor vehicle that is provided for the route is evaluated, at least in portions, wherein, for evaluation, on the basis of the speed profile (6), an assignment to at least one road class (7) present on the route takes place, and wherein, on the basis of the at least one assigned road class (7), a probability value (8) for a parallel travel probability is calculated and provided.

2. Method according to claim 1, **characterized in that,** on the basis of the at least one assigned road class (7), a distance (11) between junctions is additionally assigned in each case, the probability value (8) being calculated taking into account each of the assigned distances (11).

3. Method according to claim 2, **characterized in that** the distance (11) between the junctions is determined on the basis of a provided road map.

4. Method according to claim 2 or claim 3, **characterized in that,** on the basis of the at least one assigned road class (7), a junction usage probability (12) is additionally assigned in each case, the probability value (8) being calculated taking into account the assigned junction usage probability(s) (12).

5. Method according to claim 4, **characterized in that** travel data (5,15) recorded by motor vehicles are evaluated with regard to junction usage, the junction usage probability(s) (12) being determined or corrected on the basis of an evaluation result.

6. Method according to any of the preceding claims, **characterized in that** the at least one road class (7), the distance (11) and/or the junction usage probability (12) are assigned taking into account a local and/or temporal dependence.

7. Method according to any of claims 2 to 6, **characterized in that** the distance (11) between junctions is reduced by a safety distance **and/or in that** the junction usage probability (12) is increased by a safety value.

8. Device (1) for processing data, comprising means (2) which are designed to execute the method steps of the method according to any of claims 1 to 7.

9. Computer program comprising commands which, when the computer program is executed by a computer, cause the computer to execute the method steps of the method according to any of claims 1 to 7.

10. Computer-readable storage medium comprising commands which, when executed by a computer, cause the computer to execute the method steps of the method according to any of claims 1 to 7.

## Revendications

1. Procédé mis en œuvre par ordinateur permettant de déterminer une probabilité de conduite parallèle de véhicules automobiles, dans lequel

la probabilité de conduite parallèle désigne la probabilité qu'un autre véhicule automobile se trouvant dans l'environnement suive le même trajet qu'un véhicule automobile considéré,
dans lequel un profil de vitesse (6) du véhicule automobile considéré, mis à disposition pour le trajet, est évalué au moins dans certaines sections, dans lequel une affectation à au moins une classe de route (7) présente sur le trajet est effectuée pour l'évaluation sur la base du profil de vitesse (6), et dans lequel une valeur de probabilité (8) pour une probabilité de conduite parallèle est calculée et mise à disposition sur la base de l'au moins une classe de route (7) affectée.

2. Procédé selon la revendication 1, **caractérisé en ce que,** en outre, respectivement une distance (11) entre des embranchements est affectée sur la base de l'au moins une classe de route (7) affectée, dans lequel le calcul de la valeur de probabilité (8) est effectué en prenant en compte les distances (11) respectivement affectées.

3. Procédé selon la revendication 2, **caractérisé en ce que** la distance (11) entre les embranchements est déterminée sur la base d'une carte routière mise à disposition.

4. Procédé selon la revendication 2 ou 3, **caractérisé en ce que,** en outre, respectivement une probabilité d'utilisation de l'embranchement (12) est affectée sur la base de l'au moins une classe de route (7) affectée, dans lequel le calcul de la valeur de probabilité (8) est effectué en prenant en compte la ou les probabilités d'utilisation de l'embranchement (12) affectées.

5. Procédé selon la revendication 4, **caractérisé en ce que** des données de conduite (5, 15) détectées par des véhicules automobiles sont évaluées en vue d'une utilisation de l'embranchement, dans lequel la ou les probabilités d'utilisation de l'embranchement (12) sont établies ou corrigées sur la base d'un résultat d'évaluation.

6. Procédé selon l'une des revendications précédentes, **caractérisé en ce que** l'affectation d'au moins une classe de route (7), de la distance (11) et/ou de la probabilité d'utilisation de l'embranchement (12) est effectuée en prenant en compte une dépendance locale et/ou temporelle.

7. Procédé selon l'une des revendications 2 à 6, **caractérisé en ce que** la distance (11) entre les embranchements est réduite d'une distance de sécurité **et/ou en ce que** la probabilité d'utilisation de l'embranchement (12) est augmentée d'une valeur de sécurité.

8. Dispositif (1) permettant le traitement de données, comprenant des moyens (2) configurés pour exécuter les étapes de procédé du procédé selon l'une quelconque des revendications 1 à 7.

9. Programme informatique, comprenant des instructions qui, lors de l'exécution du programme informatique par un ordinateur, amènent celui-ci à exécuter les étapes de procédé du procédé selon l'une quelconque des revendications 1 à 7.

10. Support de stockage lisible par ordinateur, comprenant des instructions qui, lorsqu'elles sont exécutées par un ordinateur, amènent celui-ci à exécuter les étapes de procédé du procédé selon l'une quelconque des revendications 1 à 7.

FIG. 1

FIG. 2

**EP 3 977 433 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015226650 A1

- EP 2255347 A1